# EUROPEAN PATENT APPLICATION

(11) **EP 2 878 486 A2**
(43) Date of publication of application: **03.06.2015**
(21) Application number: 14194669.9
(22) Date of filing: 25.11.2014
(51) Int. Cl.: B60Q 1/00, F21S 8/10

(54) **Vehicular lamp**

(30) Priority: 25.11.2013 JP 2013243003
(71) Applicant: Koito Manufacturing Co., Ltd., Tokyo 108-8711 (JP)
(72) Inventor: Suda, Takafumi, Shizuoka-shi, Shizuoka (JP); Sato, Hiroyuki, Shizuoka-shi, Shizuoka (JP)
(74) Representative: Finnie, Peter John

(57) **Abstract**

A vehicular lamp (1) includes a reflector (6, 15) including a reflective face (6b, 15b) which reflects light, a first light source (12, 21) whose emitted light is reflected by the reflective face (6b, 15b) and illuminated, an illumination control body (8, 17, 8a, 17a) positioned further inside than an outer periphery of the reflector (6, 15) and including an illumination portion (9, 18) which illuminates incident light in a specific direction, and a direction control portion (10, 19) which controls the propagation direction of incident light and guides the incident light to the reflective face (6, 15), and a second light source (13, 22), whose emitted light includes a portion of emitted light which is incident to the illumination portion (9, 18) and other emitted light which is incident to the direction control portion (10, 19).

## Description

### FIELD OF INVENTION

The present invention relates to a technical field of a vehicular lamp including a reflector with a reflective face which reflects light, and two light sources.

### BACKGROUND TO THE INVENTION

Existing vehicular lamps include a reflector with a reflective face that reflects light, and two types of light sources that have different functions (see, for example, JP-A-2013-73687 and JP-A-2001-210110).

A vehicular lamp described in JP-A-2013-73687 has a configuration in which light emitted from a first light source for a turn signal lamp is reflected by a reflective face of a reflector, and illuminated toward the front, and light emitted from a second light source for a clearance lamp is incident to and guided by a light guiding body, and illuminated toward the front.

A vehicular lamp described in JP-A-2001-210110 has a configuration in which light emitted from a first light source for a headlamp is reflected by a reflective face of a reflector and illuminated toward the front, and a portion of light emitted from a second light source for a clearance lamp passes through a clearance lamp lens and is illuminated toward the front, and other light emitted from the second light source is incident to the reflector through a light-passing hole, reflected by the reflective face, and illuminated toward the front.

In each of the vehicular lamps described in JP-A-2013-73687 and JP-A-2001-210110, light emitted from the first light source and the second light source, respectively, is illuminated toward the front from a wide region, thereby achieving a broader illumination range for the light emitted from the respective light sources.

Broadening the light illumination range in this manner improves visibility for the vehicle driver, and also improves visibility for drivers of other vehicles, pedestrians, and the like.

In the vehicular lamp described in JP-A-2013-73687, plural light sources with the same function are disposed in a row. By broadening the illumination range of each light source as described above, the regulatory issue of "requiring the distance between illumination regions to be a specific distance or less for light emitted from plural light sources with the same function" is resolved.

However, the vehicular lamp described in JP-A-2013-73687 includes plural light sources with different functions disposed in a row, and includes the reflector formed with its length in the direction of the row of light sources, and the light guiding body likewise formed with its length in the direction of the row of light sources, resulting in a large overall size and complex structure.

Moreover, in the vehicular lamp described in JP-A-2001-210110, a lamp unit including the second light source for the clearance lamp and the lens for the clearance lamp is disposed further to the outside than the outer periphery of the reflector, thereby hindering a reduction in size.

### SUMMARY OF INVENTION

Exemplary embodiments of the invention is to provide a vehicular lamp which can achieve a broader illumination range for the light emitted from each of the light sources as well as securing a smaller size and a simpler structure.

A vehicular lamp according to an exemplary embodiment of the invention comprises:
a reflector including a reflective face configured to reflect light;
a first light source whose emitted light is reflected by the reflective face and illuminated;
an illumination control body positioned further inside than an outer periphery of the reflector and including an illumination portion configured to illuminate incident light in a specific direction, and a direction control portion configured to control the propagation direction of incident light and to guide the incident light to the reflective face; and
a second light source, whose emitted light includes a portion of emitted light which is incident to the illumination portion and other emitted light which is incident to the direction control portion.

Accordingly, a portion of the light emitted from the second light source is illuminated by the illumination portion of the illumination control body that is positioned further inside than the outer periphery of the reflector, and the other light is guided to the reflective face of the reflector by the direction control portion.

In the vehicular lamp, a light guiding body configured to guide incident light internally may be employed as the illumination control body.

Light emitted from the second light source is thereby guided to both the illumination portion and the direction control portion by the light guiding body.

In the vehicular lamp, the illumination control body may include a plurality of incident faces facing in different directions to each other, with light emitted from the second light source incident to each of the incident faces, and light may be incident to the direction control portion from at least one of the incident faces out of the plurality of incident faces.

Light is thereby divided between the illumination portion and the direction control portion by the plural incident faces that face in different directions to each other.

In the vehicular lamp, a reflective body may be configured to reflect incident light is employed as the illumination control body.

Light emitted from the second light source is thereby reflected by the reflective body, and guided to both the illumination portion and the direction control portion.

According to the invention, a portion of the light emitted from the second light source is illuminated by the illumination portion of the illumination control body that is positioned further inside than the outer periphery of the reflector, and the other light is guided to the reflective face of the reflector by the direction control portion, and illuminated. Accordingly, as well as securing a smaller size and a simpler structure, a broader illumination range can also be achieved for the light emitted from each of the light sources.

### BRIEF DESCRIPTION OF THE DRAWINGS

Fig. 1 illustrates an embodiment of a vehicular lamp of the invention together with Fig. 2 to Fig. 4, and is a schematic face-on view of the vehicular lamp,
Fig. 2 is a schematic horizontal cross-section view illustrating an inner structure of the vehicular lamp, in a state with a portion omitted.
Fig. 3 is a schematic enlarged cross-section view illustrating a configuration of an illumination control body, etc., together with a path of light emitted from a second light source.
Fig. 4 is a schematic enlarged cross-section view illustrating an example of a reflective body employed as an illumination control body.

### DETAILED DESCRIPTION

Explanation follows regarding an embodiment of a vehicular lamp of the invention, with reference to the attached drawings.

The embodiment described below is applied to a combination lamp including a clearance lamp that illuminates light to the front, and functions as a headlamp and a side marker lamp, and a daytime running lamp that functions as a daytime marker lamp. Note that the invention can be applied to a wide range of various combination lamps combining the functions of two or more types of lamp, including various lamps such as headlamps, tail lamps, clearance lamps, turn signal lamps, stop lamps, daytime running lamps, cornering lamps, hazard lamps, position lamps, back lamps, and fog lamps, etc.

Vehicular lamps 1, 1 are, for example, disposed attached to respective right and left end portions at a front end portion of a non-illustrated vehicle body.

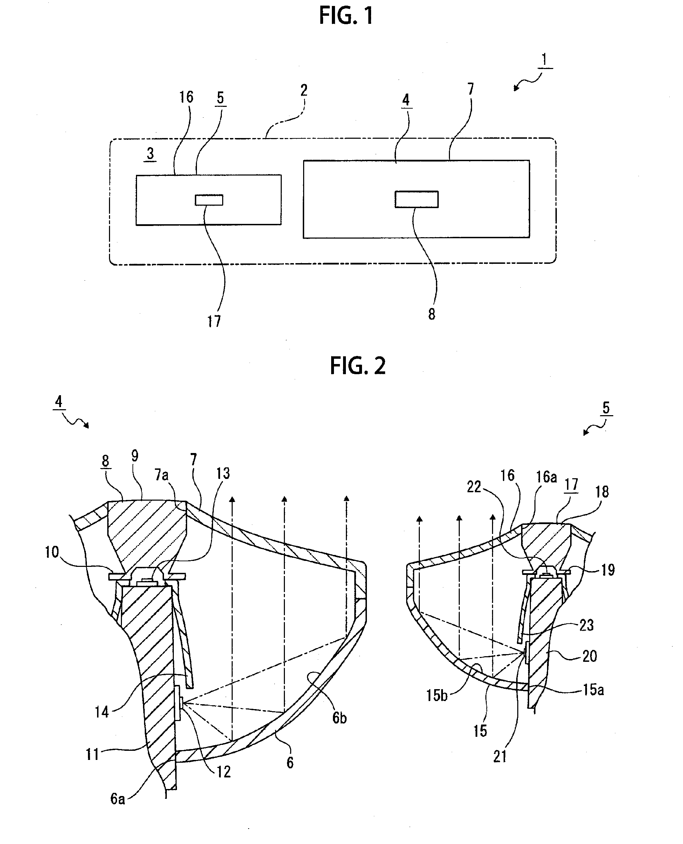

The vehicular lamp 1 includes a lamp housing including a concave portion open to the front, and a cover that closes off the opening of the lamp housing (see Fig. 1). A lamp outer housing 2 is configured by the lamp housing and the cover, and an inner space of the lamp outer housing 2 forms a lamp chamber 3.

A first lamp unit 4 and a second lamp unit 5 are, for example, disposed in a row from left to right in the lamp chamber 3.

The first lamp unit 4 includes a concave shaped reflector 6 opening to the front, and an inner lens 7 that closes off the opening of the reflector 6. The first lamp unit 4 functions as a headlamp, for example, provided as a low beam lamp unit that illuminates the near distance.

An insertion hole 6a is formed at a central portion of a rear end portion of the reflector 6. An inner face of the reflector 6 is formed as a reflective face 6b that reflects light.

An attachment hole 7a is formed at a central portion of a front end portion of the inner lens 7.

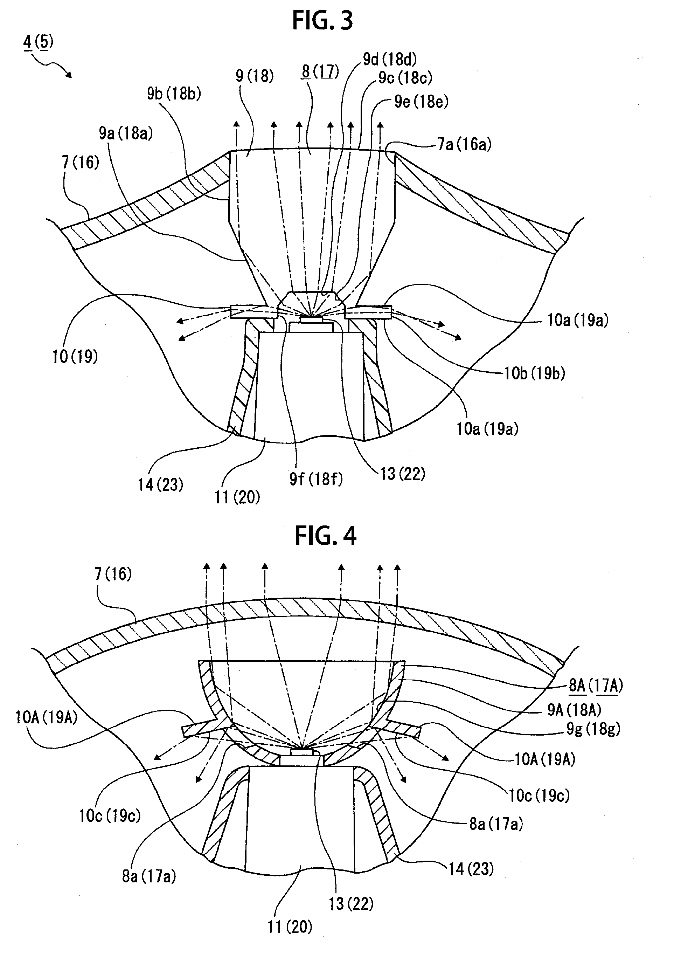

An illumination control body 8, formed of a transparent material, is attached to the inner lens 7 (see Fig. 2 and Fig. 3). The illumination control body 8 functions to control illumination of the light and the propagation direction of the light, and a front end portion thereof is inserted into the attachment hole 7a and attached to the inner lens 7. The illumination control body 8 is therefore positioned further inside than the outer periphery of the reflector 6.

The illumination control body 8 is integrally formed with an illumination portion 9 that illuminates light, and a flange shaped direction control portion 10 that protrudes outward from a rear end portion of the illumination portion 9.

An outer peripheral face of a substantially rear half portion of the illumination portion 9 is formed as a sloped face that is displaced inward on progression rearward, the sloped face forming a first internal reflection face 9a. An outer peripheral face of the illumination portion 9, further to the front side than the first internal reflection face 9a, forms a second internal reflection face 9b, and a front face of the illumination portion 9 forms an emission face 9c.

A concave portion opening to the rear is formed at a rear end portion of the illumination portion 9. The concave portion is formed by a first incident face 9d which faces the rear, a second incident face 9e which is contiguous to the outer periphery of the first incident face 9d, and which slopes so as to be displaced outward on progression rearward, and a circular ring shaped third incident face 9f which is contiguous to a rear end of the second incident face 9e.

A front face and a rear face of the direction control portion 10 form respective internal reflection faces 10a, 10a, and an outer peripheral face of the direction control portion 10 forms an emission face 10b.

A pillar shaped attachment body 11 that extends from front to rear is disposed in an inserted state through the insertion hole 6a of the reflector 6 at the rear side of the illumination control body 8.

A first light source 12 is disposed at an outer peripheral face of the attachment body 11. Note that there may be plural of the first light sources 12 disposed in a circumferential direction. A Light Emitting Diode (LED), for example, is employed as the first light source 12. A second light source 13 is disposed at a front face of the attachment body 11. A Light Emitting Diode (LED), for example, is employed as the second light source 13.

A ring shaped extension 14 is disposed at the outer peripheral side of the attachment body 11. The extension 14 is disposed so as to cover a portion that is substantially the front side half of the attachment body 11 from the outside, and functions to improve appearance by making the attachment body 11 less visible from the outside.

Although differing in size to the first lamp unit 4, the second lamp unit 5 is configured similarly to the first lamp unit 4. Configuration of the 5 is therefore explained simply below.

The second lamp unit 5 includes a reflector 15 and an inner lens 16. The second lamp unit 5 functions as a headlamp, for example provided as a high beam lamp unit that illuminates the far distance.

An insertion hole 15a is formed to the reflector 15. An inner face of the reflector 15 forms a reflective face 15b.

An attachment hole 16a is formed to the inner lens 16.

An illumination control body 17, formed of a transparent material, is attached to the inner lens 16. The illumination control body 17 functions to control illumination of the light and the propagation direction of the light, and a front end portion thereof is inserted into the attachment hole 16a and attached to the inner lens 16. The illumination control body 17 is therefore positioned further inside than the outer periphery of the reflector 15.

The illumination control body 17 is integrally formed with an illumination portion 18 and a direction control portion 19.

A first internal reflection face 18a, a second internal reflection face 18b, and an emission face 18c are formed to the illumination portion 18.

A first incident face 18d, a second incident face 18e, and a third incident face 18f are formed to a rear end portion of the illumination portion 18.

Internal reflection faces 19a, 19a, and an emission face 19b are formed to the direction control portion 19.

An attachment body 20 is disposed to the illumination control body 17 in an inserted state through the insertion hole 15a of the reflector 15.

A first light source 21 is disposed at an outer peripheral face of the attachment body 20. Note that plural first light sources 21 may be disposed in a circumferential direction. A Light Emitting Diode (LED), for example, is employed as the first light source 21. A second light source 22 is disposed at a front face of the attachment body 20. A Light Emitting Diode (LED), for example, is employed as the second light source 22.

An extension 23 is disposed at the outer peripheral side of the attachment body 20. The extension 23 is disposed so as to cover a portion that is substantially the front side half of the attachment body 20 from the outside, and functions to improve appearance by making the attachment body 20 less visible from the outside.

In the vehicular lamp 1 with the above-described configuration, as illustrated in Fig. 2, when light is emitted from the first light source 12 of the first lamp unit 4, the emitted light is incident to the reflector 6, reflected by the reflector 6, passes through the inner lens 7 and the cover, and is illuminated toward the front. When this occurs, light is also present that is reflected by the reflector 6 and incident to the illumination portion 9 of the illumination control body 8. The light incident to the illumination portion 9 is emitted from the emission face 9c, passes through the cover, and is illuminated toward the front.

Light emitted from the first light source 12 of the first lamp unit 4 is reflected by the reflector 6, thereby illuminating a headlamp low beam toward the front.

As illustrated in Fig. 2, when light is emitted from the first light source 21 of the second lamp unit 5, the emitted light is incident to the reflector 15, reflected by the reflector 15, passes through the inner lens 16 and the cover, and is illuminated toward the front. When this occurs, light is also present that is reflected by the reflector 15 and incident to the illumination portion 18 of the illumination control body 17. The light incident to the illumination portion 18 is emitted from the emission face 18c, passes through the cover, and is illuminated toward the front.

Light is emitted from the first light source 21 of the second lamp unit 5 during light emission from the first light source 12 of the first lamp unit 4.

In this way, light emitted from the first light source 12 of the first lamp unit 4 and reflected by the reflector 6, as well as light emitted from the first light source 21 of the second lamp unit 5 and reflected by the reflector 15, thereby illuminates a high beam for a headlamp toward the front.

In the vehicular lamp 1 with the above-described configuration, light is simultaneously emitted from the second light source 13 of the first lamp unit 4 and the second light source 22 of the second lamp unit 5 (see Fig. 3).

When light is emitted from the second light source 13 of the first lamp unit 4, a portion of the emitted light is incident through the first incident face 9d and the second incident face 9e to the illumination portion 9 of the illumination control body 8, and is internally reflected by the first internal reflection face 9a and the second internal reflection face 9b, or is guided to the emission face 9c side of the illumination portion 9 without reaching the first internal reflection face 9a or the second internal reflection face 9b, and emitted from the emission face 9c. The light emitted from the emission face 9c passes through the cover, and is illuminated toward the front.

The other light emitted from the second light source 13 of the first lamp unit 4 is incident through the third incident face 9f to the direction control portion 10 of the illumination control body 8, internally reflected by the internal reflection faces 10a, 10a, guided to the emission face 10b side of the direction control portion 10, and emitted from the emission face 10b. The light emitted from the emission face 10b is incident to the reflector 6, reflected by the reflector 6, passes through the inner lens 7 and the cover, and is illuminated toward the front.

At the same time, when light is emitted from the second light source 22 of the second lamp unit 5, a portion of the emitted light is incident through the first incident face 18d and the second incident face 18e to the illumination portion 18 of the illumination control body 17, and is internally reflected by the first internal reflection face 18a and the second internal reflection face 18b, or is guided to the emission face 18c side of the illumination portion 18 without reaching the first internal reflection face 18a or the second internal reflection face 18b, and emitted from the emission face 18c. The light emitted from the emission face 18c passes through the cover, and is illuminated toward the front.

The other light emitted from the second light source 22 of the second lamp unit 5 is incident through the third incident face 18f to the direction control portion 19 of the illumination control body 17, internally reflected by the internal reflection faces 19a, 19a, guided to the emission face 19b side of the direction control portion 19, and emitted from the emission face 19b. The light emitted from the emission face 19b is incident to the reflector 15, reflected by the reflector 15, passes through the inner lens 16 and the cover, and is illuminated toward the front.

Light emitted from the second light source 13 of the first lamp unit 4 and the second light source 22 of the second lamp unit 5 is thus emitted from the illumination control bodies 8, 17, and also guided by the direction control portions 10, 19 and reflected by the reflectors 6, 15, to illuminate a clearance beam or a daytime running beam toward the front.

As described above, since a light guiding body that internally guides incident light is employed as the illumination control body 8 in the vehicular lamp 1, the light can be guided in a desired direction, and the propagation direction of the light can be controlled using a simple structure.

Moreover, plural incident faces (the first incident faces 9d, 18d, the second incident faces 9e, 18e, and the third incident faces 9f, 18f) facing in different directions are formed to the illumination control bodies 8, 17, and light is incident through at least one of the incident faces (the third incident faces 9f, 18f) out of the plural incident faces to the direction control portions 10, 19.

The light is thereby divided between the illumination portions 9, 18 and the direction control portions 10, 19 by the plural incident faces facing in different directions, such that the light can be reliably divided using a simple configuration.

Although an example is given in which the illumination control bodies 8, 17 employ light guiding bodies, illumination control bodies 8A, 17A that are reflective bodies that reflect light may for example be employed as the illumination control bodies instead of the light guiding bodies (see Fig. 4).

The illumination control body 8A includes an illumination portion 9A that is formed in a concave shape open to the front, and direction control portions 10A, 10A... that protrude outward from the illumination portion 9A. An inner face of the illumination portion 9A forms a first reflective face 9g. The direction control portions 10A, 10A... are provided at intervals in the circumferential direction, and rear faces of the direction control portions 10A, 10A... form respective second reflective faces 10c, 10c...

Respective light passing holes 8a, 8a... are formed at the immediate rear side of the direction control portions 10A, 10A... in the illumination portion 9A of the illumination control body 8A.

The illumination control body 17A includes an illumination portion 18A that is formed in a concave shape open to the front, and direction control portions 19A, 19A... that protrude outward from the illumination portion 18A. An inner face of the illumination portion 18A forms a first reflective face 18g. The direction control portions 19A, 19A... are provided at intervals in the circumferential direction, and rear faces of the direction control portions 19A, 19A... form respective second reflective faces 19c, 19c...

Respective light passing holes 17a, 17a... are formed at the immediate rear side of the direction control portions 19A, 19A... in the illumination portion 18A of the illumination control body 17A.

Note that, in a case in which the illumination control bodies 8A, 17A are employed instead of the illumination control bodies 8, 17, there is no need to form attachment holes 7a, 16a to the inner lenses 7, 16, and the illumination control bodies 8A, 17A may, for example, be attached to respective front end portions of the attachment bodies 11, 20.

Light is also simultaneously emitted from the second light source 13 of the first lamp unit 4 and the second light source 22 of the second lamp unit 5 in a case in which the illumination control bodies 8A, 17A are employed.

When light is emitted from the second light source 13 of the first lamp unit 4, portions of the emitted light are respectively incident to the first reflective face 9g of the illumination portion 9A and the second reflective faces 10c, 10c... in the illumination control body 8A. Light incident to the second reflective faces 10c, 10c... is light that has passed through the light passing holes 8a, 8a... Light incident to the first reflective face 9g is reflected by the first reflective face 9g, passes through the inner lens 7 and the cover, and is illuminated toward the front. Light incident to the second reflective faces 10c, 10c... is reflected by the second reflective faces 10c, 10c..., is incident to the reflector 6, reflected by the reflector 6, passes through the inner lens 7 and the cover, and is illuminated toward the front.

At the same time, when light is emitted from the second light source 22 of the second lamp unit 5, portions of the emitted light are respectively incident to the first reflective face 18g of the illumination portion 18A and the second reflective faces 19c, 19c... in the illumination control body 17A. Light incident to the second reflective faces 19c, 19c... is light that has passed through the light passing holes 17a, 17a... Light incident to the first reflective face 18g is reflected by the first reflective face 18g, passes through the inner lens 16 and the cover, and is illuminated toward the front. Light incident to the second reflective faces 19c, 19c... is reflected by the second reflective faces 19c, 19c..., is incident to the reflector 15, reflected by the reflector 15, passes through the inner lens 16 and the cover, and is illuminated toward the front.

Light emitted from the second light source 13 of the first lamp unit 4 and the second light source 22 of the second lamp unit 5, is thus emitted from the illumination control bodies 8A, 17A, and also guided by the direction control portions 10A, 19A, and reflected by the reflectors 6, 15, to illuminate a clearance beam or a daytime running beam toward the front.

By using reflective bodies that reflect incident light as the illumination control bodies 8A, 17A as described above, light can be reflected and guided in a desired direction, and the propagation direction of the light can be controlled, using a simple structure.

As described above, the vehicular lamp 1 is provided with the illumination control bodies 8, 8A including the illumination portions 9, 18 or illumination portions 9A, 18A that illuminate incident light toward a specific direction, and the direction control portions 10, 19 or direction control portions 10A, 19A that control the propagation direction of the incident light to guide the light to the reflective faces 6b, 15b of the reflectors 6, 15, with the illumination control bodies 8, 8A positioned further to the inside than the outer periphery of the reflectors 6, 15 illumination control bodies.

Thus, in the vehicular lamp 1, a portion of the light emitted by the second light sources 13, 22 is illuminated by the illumination portions 9, 18 or the illumination portions 9A, 18A of the illumination control bodies 8, 8A, that are positioned further to the inside than the outer periphery of the reflectors 6, 15, and the other light is guided to and illuminated by the reflective faces 6b, 15b of the reflectors 6, 15 by the direction control portions 10, 19 or the direction control portions 10A, 19A.

Since, besides the light illuminated from the illumination portions 9, 18 or the illumination portions 9A, 18A positioned further to the inside than the outer periphery of the reflectors 6, 15, light reflected by the reflectors 6, 15 is also illuminated at the same time, as well as securing a smaller size and a simpler structure, a broader illumination range of the light emitted from the second light sources 13, 22 can also be achieved.

Moreover, since the illumination range of light can be broadened, a high performance vehicular lamp 1 can be provided meeting regulations that "require the distance between illumination regions to be a specific distance or less for light emitted from plural light sources with the same function".

## Claims

1. A vehicular lamp comprising:
a reflector (6, 15) including a reflective face (6b, 15b) configured to reflect light;
a first light source (12, 21) whose emitted light is reflected by the reflective face (6b, 15b) and illuminated;
an illumination control body (8, 17, 8A, 17A) positioned further inside than an outer periphery of the reflector (6, 15) and including an illumination portion (9, 18) configured to illuminate incident light in a specific direction, and a direction control portion (10, 19) configured to control the propagation direction of incident light and to guide the incident light to the reflective face (6, 15); and
a second light source (13, 22), whose emitted light includes a portion of emitted light which is incident to the illumination portion (9, 18) and other emitted light which is incident to the direction control portion (10, 19).

2. The vehicular lamp of Claim 1, wherein a light guiding body (8, 17) configured to guide incident light internally is employed as the illumination control body.

3. The vehicular lamp of Claim 2, wherein:
the illumination control body (8, 17) includes a plurality of incident faces (9d, 9e, 9f, 18d, 18e, 18f) facing in different directions to each other, with light emitted from the second light source (13, 22) incident to each of the incident faces; and
light is incident to the direction control portion (10, 19) from at least one of the incident faces (9f, 18f) out of the plurality of incident faces.

4. The vehicular lamp of Claim 1, wherein a reflective body (8A, 17A) configured to reflect incident light is employed as the illumination control body.
